# EUROPEAN PATENT SPECIFICATION

(11) **EP 3 146 837 B1**
(45) Date of publication and mention of the grant of the patent: **09.10.2019**
(21) Application number: 16189887.9
(22) Date of filing: 21.09.2016
(51) Int. Cl.: A01J 9/04, A01J 9/00

(54) **SYSTEM FOR ENERGY RECOVERY FOR ZOOTECHNICAL PLANTS**
SYSTEM ZUR ENERGIERÜCKGEWINNUNG FÜR ZOOTECHNISCHE ANLAGEN
SYSTÈME DE RÉCUPÉRATION D'ÉNERGIE POUR DES INSTALLATIONS ZOOTECHNIQUES

(30) Priority: 25.09.2015 IT UB20153884
(43) Date of publication of application: 29.03.2017
(73) Proprietor: D. & G. S.r.l., 24050 Ghisalba (BG) (IT)
(72) Inventor: GHISLOTTI, Bortolo, 24050 Ghisalba BG (IT)
(74) Representative: Modiano, Micaela Nadia

(56) References cited:
- WO-A1-2012/113092
- JP-A- 2001 330 313
- US-A1- 2005 183 428

## Description

The present invention relates to a system for energy recovery for zootechnical plants.

Traditionally zootechnical plants, typically milking plants, have systems for cooling the milk as soon as it has been milked in order to store it, in adapted tanks, at a temperature of approximately 4°C; they also have tanks for accumulating hot water for use in the utilities of the zootechnical company, such as for example apparatuses for washing the tanks, for sterilizing the plant, etc, see e.g. US 2005/0183428 A1.

The use is also known of geothermal heat pumps for producing hot water for storage in insulated tanks, from which the necessary hot water is retrieved for the utilities and partially lowering the temperature of the milk by way of adapted refrigeration units.

Usually, the geothermal heat pump draws the water from an underground water table, sends it to a heat exchanger and discharges it back into the same water table, generally at a temperature of 9°C.

In milking plants it is essential to cool the milk extremely rapidly in order to preserve its quality.

In fact, from 35°C - 37°C approximately, the temperature at which it leaves the udder, the milk has to be cooled as rapidly as possible to around 4°C in order to prevent the proliferation of microorganisms.

The apparatuses usually used for refrigerating the milk comprise direct and indirect refrigeration systems, depending on whether the transfer of heat occurs directly on the refrigerant fluid or by way of an intermediate fluid, usually water.

In direct expansion, the coolant gas expands in the evaporators inside the wall of the refrigeration vat and transmits the cold to the wall. In indirect systems, the coolant element is chilled water.

The cooling unit is made up of two tanks, which can in some cases be integrated one inside the other: the milk is stored in one tank and the chilled water in the other one. The evaporators are immersed in the water, creating a reserve of ice, which keeps the rest of the water at a temperature of +1°C. In this case the cold is present right from when the milking starts.

There is also an instantaneous cooling system which couples the chilled water system with plates or tubular exchangers, and allows to cool considerable quantities of milk using the tank only as a container for maintaining the temperature. The aim of instantaneous refrigeration is to limit as much as possible the development of bacterial microflora.

The solutions employed today suffer some problems, especially with regard to the high energy consumption necessary for cooling the milk, such cooling usually being done, at least partially, using electricity, and necessary for heating the water for use in the zootechnical plant.

The aim of the present invention is to eliminate, or at least to drastically reduce, the above mentioned drawback in zootechnical plants.

Within this aim, an object of the invention is to provide an energy recovery system that makes it possible to have the quantity of hot water and of cold and lukewarm water necessary for the correct operation of the entire system.

Another object of the invention is to devise a system that is structurally simple and has competitive production and running costs, so as to make its use advantageous from an economic viewpoint as well.

This aim and these and other objects which will become better apparent hereinafter are achieved by a system for energy recovery for zootechnical plants according to the appended independent claim 1.

Further characteristics and advantages of the invention will become better apparent from the description of some preferred, but not exclusive, embodiments of a system for energy recovery for zootechnical plants, according to the invention, illustrated by way of non-limiting example in the accompanying figure which is a schematic view of a practical implementation of a system for energy recovery for a zootechnical plant.

The present invention relates to a system, generally designated by the reference numeral 1, for energy recovery for zootechnical plants.

The system 1 comprises a geothermal heat pump 2 which has a device for heat exchange between a first circuit 4 of water to be cooled, and a second circuit 5 of water to be heated.

The heat exchange device comprises a first tank 3 connected functionally to the geothermal heat pump 2.

By way of example, thanks to the action of the heat pump 2, the circuit 5 of water to be heated leads into the first tank 3 and is kept at a temperature of approximately 45-60 °C.

Conveniently, the first tank 3 is connected to a second hot water accumulation tank 6.

In the second accumulation tank 6 the water is typically kept at a temperature of approximately 65-70 °C.

The first circuit 4 of water to be cooled, comprises a duct 4a for drawing well water at a first temperature and a duct 4b for discharging the well water at a temperature that is lower than the first temperature.

Generally, the first temperature is substantially equal to 14-16°C while the lower temperature of the water passing through the discharge duct 4b is substantially equal to 8-10°C.

As previously mentioned, the second circuit 5 of water to be heated is meant to heat the water, which is also advantageously drawn from a well or from the aquifer, for storage in a first tank 3 and then in a second hot water accumulation tank 6.

The water is sent, through the second circuit 5, into the first tank at a temperature comprised between 45°C and 60°C, preferably substantially equal to 55°C.

The system 1 comprises, furthermore, a milk conveyance duct 7 from a milking plant 7a to a low-temperature milk storage tank 7b.

The milk is taken from the milking plant at a temperature of approximately 35°C-37°C while inside the low-temperature milk storage tank 7b it has a temperature of less than or equal to 4°C.

According to the present invention, the system 1 comprises a first accumulation vat 8 for the water that arrives from the discharge duct 4b.

There is furthermore, along the milk conveyance duct 7, at least one first exchanger 9.

In particular, for cooling the milk, the first exchanger 9 uses the water stored in the first accumulation vat 8 and originating from the discharge duct 4b.

Advantageously, the first exchanger 9 is connected, at its inlet point, to a first duct portion 9b for supplying the water stored in the first accumulation vat 8 and, at its outlet point, to a second duct portion 9c for sending the water drawn from the first accumulation vat 8 to a second accumulation vat 10 intended to supply lukewarm water to a watering device 11.

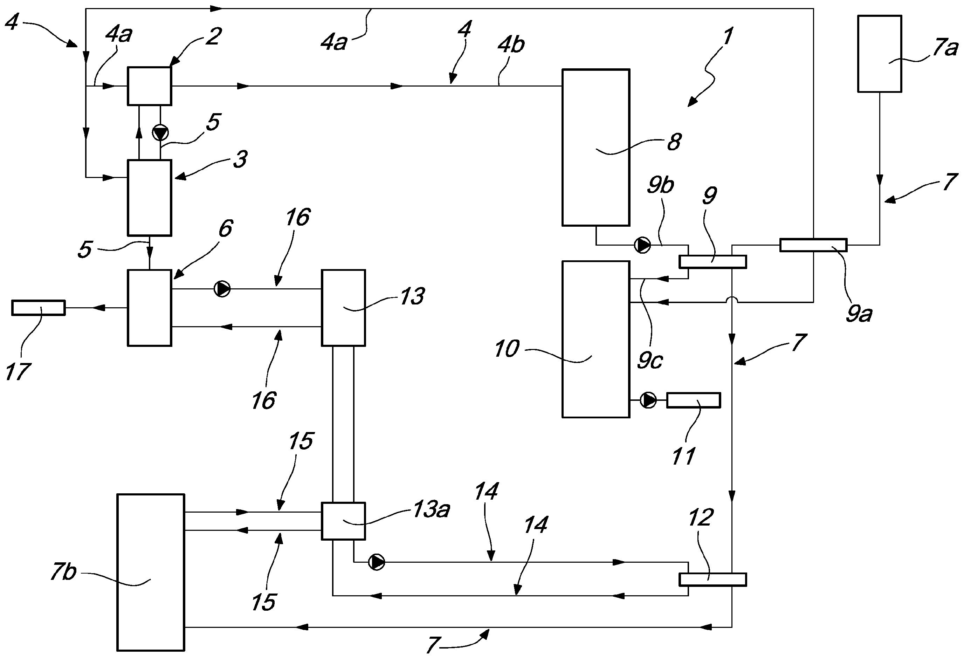

According to a preferred embodiment illustrated in Figure 1, there is, along the milk conveyance duct 7 and upstream of the first exchanger 9, an additional exchanger 9a connected functionally to the duct 4a for drawing well water and intended to perform a first cooling of the milk that passes through the milk conveyance duct 7.

For the purposes of example, the milk exiting from the additional exchanger 9a can indicatively have a temperature of approximately 25-26°C, while exiting from the subsequent first exchanger 9 it indicatively has a temperature of approximately 13-15°C.

Conveniently, along the milk conveyance duct 7, there is a second exchanger 12 connected functionally to a milk refrigeration unit 13.

Conveniently, the milk refrigeration unit 13 comprises a chilled water accumulation vat 13a connected, by way of a cooling circuit 14, to the second exchanger 12.

Preferably, the chilled water accumulation vat 13a is connected, by way of a holding circuit 15, to the low-temperature milk storage tank 7b.

The refrigeration unit 13 can obviously also be of the expansion type.

The refrigeration unit 13 is likewise connected functionally to the second hot water accumulation tank 6 by way of an exchanger circuit 16.

Conveniently, the second hot water accumulation tank 6 is connected functionally to a device 17 that uses hot water, such as for example an apparatus for washing, sterilization etc..

With reference to the embodiment shown in the schematic diagram in the figure, the first exchanger 9 is arranged upstream of the second exchanger 12 along the milk conveyance duct 7.

In practice, the additional exchanger 9a (which uses well water) lowers the temperature of the milk from 35-37°C to around 25-26°C, the first exchanger 9, using the water stored in the first accumulation vat 8, further lowers the temperature of the milk that passes through the milk conveyance duct 7 from 25-26 °C to about 13-15 °C, thus reducing by approximately 50% the energy needed for the refrigeration of the milk.

It has been found that the solution of the present patent application is extremely efficacious both in zootechnical plants with traditional milking (i.e. done two or three times per day), and also with robotized milking with constant flow (in this latter case the milking operations are performed over the entire course of the day).

It has been found that, for plants with robotized milking, it is possible to drastically reduce the size of the accumulation tanks and vats, and in particular of the first accumulation vat 8.

The present invention further relates to a method according to claim 7 for processing zootechnical products such as milk, which comprises:
- a step of sending water to be cooled to a geothermal heat pump 2 through a first circuit 4 of water to be cooled, which is provided with a duct 4a for drawing well water at a first temperature and a duct 4b for discharging such well water at a temperature that is lower than such first temperature, and of sending water to be heated through a second circuit 5 of water to be heated;
- a step of storing the heated water in at least one first hot water accumulation tank 3,
- a step of storing the cooled water arriving from the discharge duct in a first accumulation vat 8;
- a step of using the heated water stored in the first hot water accumulation tank;
- a step of using the cooled water stored in the first accumulation vat 8.

All the characteristics of the invention, indicated above as advantageous, convenient or similar, may also be missing or be substituted by equivalent characteristics.

The individual characteristics set out in reference to general teachings or to specific embodiments may all be present in other embodiments or may substitute characteristics in such embodiments.

In practice it has been found that in all the embodiments, the invention has achieved the intended aim and objects.

In practice the materials employed, as well as the dimensions and the contingent shapes, may be any according to requirements.

In practice the materials employed, provided they are compatible with the specific use, and the dimensions and shapes, may be any according to requirements.

Moreover, all the details may be substituted by other, technically equivalent elements.

The present disclosure claims priority from Italian Patent Application No. 102015000055208 (UB2015A003884).

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (1) for energy recovery for zootechnical plants, which comprises
- a first circuit (4) of water to be cooled, which has a duct (4a) for drawing well water at a first temperature and a duct (4b) for discharging said well water at a temperature that is lower than said first temperature in a first accumulation vat (8) for the water that arrives from said discharge duct (4b)
- a duct (7) for conveying milk from a milking plant (7a) to a low-temperature milk storage tank (7b), there being, along said milk conveyance duct (7), at least one first exchanger (9) that uses, for cooling said milk, the water stored in said first accumulation vat (8) for the water that arrives from said discharge duct (4b)
**characterized in that**
the system (1) further comprises:
- a geothermal heat pump (2)
- a second circuit (5) of water to be heated in order to be stored in at least one first hot water accumulation tank (3),
said geothermal heat pump (2) being provided with a device for heat exchange between said said first circuit (4) and said second circuit (5),
- a milk refrigeration unit (13)
- a second exchanger (12) connected functionally to said milk refrigeration unit (13), said second exchanger being provided along said milk conveyance duct (7),
said milk refrigeration unit (13) comprising a chilled water accumulation vat (13a) connected, by way of a cooling circuit (14), to said second exchanger (12)
said milk refrigeration unit (13) being connected functionally to a second hot water accumulation tank (6), which is connected to the first hot water accumulation tank (3) by way of an exchanger circuit (16).

2. The system (1) according to claim 1, **characterized in that** said first exchanger (9) is connected, at its inlet point, to a first duct portion (9b) for supplying the water stored in said accumulation tank (8) and, at its outlet point, to a second duct portion (9c) for sending the water drawn from said first accumulation tank (8) to a second accumulation tank (10) intended to supply lukewarm water to a watering device (11).

3. The system (1) according to one or more of the preceding claims, **characterized in that** it comprises, along said milk conveyance duct (7) and upstream of said first exchanger (9), an additional exchanger (9a) connected functionally to the duct (4a) for drawing well water and intended to perform a first cooling of the milk that passes through said milk conveyance duct (7).

4. The system (1) according to one or more of the preceding claims, **characterized in that** said chilled water accumulation vat (13a) is connected, by way of a holding circuit (15), to said low-temperature milk storage tank (7b).

5. The system (1) according to one or more of the preceding claims, **characterized in that** said second hot water accumulation tank (6) is connected functionally to a device (17) for using said hot water.

6. The system (1) according to one or more of the preceding claims, **characterized in that** said first exchanger (9) is arranged upstream of said second exchanger (12) along said milk conveyance duct (7).

7. A method for processing zootechnical products such as milk, with a system (1) according to claim 1, which comprises:
- a step of sending water to be cooled to a geothermal heat pump (2) through a first circuit (4) of water to be cooled, which is provided with a duct (4a) for drawing well water at a first temperature and a duct (4b) for discharging said well water at a temperature that is lower than said first temperature, and of sending water to be heated through a second circuit (5) of water to be heated;
- a step of storing said heated water in at least one first hot water accumulation tank (3);
- a step of storing said cooled water arriving from said discharge duct in a first accumulation vat (8);
- a step of using said heated water stored in said first hot water accumulation tank (3);
- a step of using said cooled water stored in said first accumulation vat (8).

## Patentansprüche

1. Ein System (1) zur Energierückgewinnung für zootechnische Anlagen, das Folgendes umfasst:
- einen ersten Kreislauf (4) von zu kühlendem Wasser, der eine Leitung (4a) zur Entnahme von Brunnenwasser bei einer ersten Temperatur und eine Leitung (4b) zur Abgabe des Brunnenwassers bei einer Temperatur, die niedriger ist als die erste Temperatur, in eine erste Speicherwanne (8) für das von der Abgabeleitung (4b) kommende Wasser hat,
- eine Leitung (7) zum Befördern von Milch von einer Melkanlage (7a) zu einem Milchlagerungstank (7b) mit niedriger Temperatur, wobei sich entlang der Milchförderleitung (7) mindestens ein erster Tauscher (9) befindet, der zum Kühlen der Milch das Wasser nutzt, das in der ersten Speicherwanne (8) für das von der Abgabeleitung (4b) kommende Wasser gespeichert ist, **dadurch gekennzeichnet, dass** das System (1) weiter Folgendes umfasst:
- eine geothermische Wärmepumpe (2),
- einen zweiten Kreislauf (5) von Wasser, das erhitzt werden soll, um in mindestens einem ersten Heißwasserspeichertank (3) gespeichert zu werden,
wobei die geothermische Wärmepumpe (2) mit einer Vorrichtung für den Wärmeaustausch zwischen dem ersten Kreislauf (4) und dem zweiten Kreislauf (5) ausgestattet ist;
- eine Milchkühleinheit (13),
- einen zweiten Tauscher (12), der funktionell mit der Milchkühleinheit (13) verbunden ist, wobei der zweite Tauscher entlang der Milchförderleitung (7) angebracht ist,
wobei die Milchkühleinheit (13) eine Speicherwanne (13a) für gekühltes Wasser umfasst, die durch einen Kühlkreislauf (14) mit dem zweiten Tauscher (12) verbunden ist,
wobei die Milchkühleinheit (13) funktionell mit einem zweiten Heißwasserspeichertank (6) verbunden ist, der über einen Tauscherkreislauf (16) mit dem ersten Heißwasserspeichertank (3) verbunden ist.

2. Das System (1) gemäß Anspruch 1, **dadurch gekennzeichnet, dass** der erste Tauscher (9) an seiner Einlassstelle mit einem ersten Leitungsabschnitt (9b) zum Zuführen des in dem Speichertank (8) gespeicherten Wassers und an seiner Auslassstelle mit einem zweiten Leitungsabschnitt (9c) zum Transportieren des aus dem ersten Speichertank (8) entnommenen Wassers zu einem zweiten Speichertank (10) verbunden ist, der dazu dient, einer Wässerungsvorrichtung (11) lauwarmes Wasser zuzuführen.

3. Das System (1) gemäß einem oder mehreren der obigen Ansprüche, **dadurch gekennzeichnet, dass** es entlang der Milchförderleitung (7) und stromaufwärts von dem ersten Tauscher (9) einen weiteren Tauscher (9a) umfasst, der funktionell mit der Leitung (4a) zur Entnahme von Brunnenwasser verbunden ist und dazu dient, eine erste Kühlung der Milche vorzunehmen, die durch die Milchförderleitung (7) strömt.

4. Das System (1) gemäß einem oder mehreren der obigen Ansprüche, **dadurch gekennzeichnet, dass** die Speicherwanne (13a) für gekühltes Wasser über einen Haltekreis (15) mit dem Milchlagerungstank (7b) mit niedriger Temperatur verbunden ist.

5. Das System (1) gemäß einem oder mehreren der obigen Ansprüche, **dadurch gekennzeichnet, dass** der Speichertank (6) für heißes Wasser funktionell an eine Vorrichtung (17) zur Nutzung des heißen Wassers angeschlossen ist.

6. Das System (1) gemäß einem oder mehreren der obigen Ansprüche, **dadurch gekennzeichnet, dass** der erste Tauscher (9) entlang der Milchförderleitung (7) stromaufwärts von dem zweiten Tauscher (12) angeordnet ist.

7. Ein Verfahren zur Verarbeitung zootechnischer Produkte wie zum Beispiel Milch mit einem System (1) gemäß Anspruch 1; Folgendes umfassend:
- einen Schritt des Transports von zu kühlendem Wasser zu einer geothermischen Wärmepumpe (2) durch einen ersten Kreislauf (4) von zu kühlendem Wasser, der mit einer Leitung (4a) zur Entnahme von Brunnenwasser bei einer ersten Temperatur und einer Leitung (4b) zur Abgabe des Brunnenwassers bei einer Temperatur ausgestattet ist, die niedriger ist als die erste Temperatur; und des Transports von zu erhitzendem Wasser durch einen zweiten Kreislauf (5) von zu erhitzendem Wasser;
- einen Schritt des Speicherns des erhitzten Wassers in mindestens einem ersten Heißwasserspeichertank (3);
- einen Schritt des Speicherns des von der Abgabeleitung kommenden gekühlten Wassers in einer ersten Speicherwanne (8);
- einen Schritt des Nutzens des erhitzten Wassers, das in dem ersten Heißwasserspeichertank (3) gespeichert ist;
- einen Schritt des Nutzens des gekühlten Wassers, das in der ersten Speicherwanne (8) gespeichert ist.

## Revendications

1. Système (1) de récupération d'énergie pour des installations zootechniques, qui comporte :
- un premier circuit (4) d'eau à refroidir, qui a une conduite (4a) pour tirer de l'eau de puits à une première température et une conduite (4b) pour évacuer ladite eau de puits à une température qui est inférieure à ladite première température dans une première cuve d'accumulation (8) pour l'eau qui arrive de ladite conduite d'évacuation (4b)
- une conduite (7) pour transporter du lait provenant d'une installation de traite (7a) jusqu'à un réservoir de stockage de lait à basse température (7b), où est agencé, le long de ladite conduite de transport de lait (7), au moins un premier échangeur (9) qui utilise, pour refroidir ledit lait, l'eau stockée dans ladite première cuve d'accumulation (8) pour l'eau qui arrive de ladite conduite d'évacuation (4b)
**caractérisé en ce que** le système (1) comporte en outre :
- une pompe à chaleur géothermique (2)
- un second circuit (5) d'eau à chauffer afin d'être stockée dans au moins un premier réservoir d'accumulation d'eau chaude (3),
ladite pompe à chaleur géothermique (2) étant pourvue d'un dispositif d'échange de chaleur entre ledit premier circuit (4) et ledit second circuit (5),
- une unité de réfrigération de lait (13)
- un second échangeur (12) fonctionnellement relié à ladite unité de réfrigération de lait (13), ledit second échangeur étant agencé le long de ladite conduite de transport de lait (7),
ladite unité de réfrigération de lait (13) comportant une cuve d'accumulation d'eau fraîche (13a) reliée, au moyen d'un circuit de refroidissement (14), audit second échangeur (12)
ladite unité de réfrigération de lait (13) étant fonctionnellement reliée à un second réservoir d'accumulation d'eau chaude (6), qui est relié au premier réservoir d'accumulation d'eau chaude (3) au moyen d'un circuit d'échangeur (16).

2. Système (1) selon la revendication 1, **caractérisé en ce que** ledit premier échangeur (9) est relié, au niveau de son point d'entrée, à une première partie de conduite (9b) pour fournir l'eau stockée dans ledit réservoir d'accumulation (8) et, au niveau de son point de sortie, à une seconde partie de conduite (9c) pour envoyer l'eau tirée à partir dudit premier réservoir d'accumulation (8) à un second réservoir d'accumulation (10) destiné à fournir de l'eau tiède à un dispositif d'abreuvement (11).

3. Système (1) selon une ou plusieurs des revendications précédentes, **caractérisé en ce qu'**il comporte, le long de ladite conduite de transport de lait (7) et en amont dudit premier échangeur (9), un échangeur supplémentaire (9a) fonctionnellement relié à la **conduite (4a) pour tirer de l'eau de puits et destiné à** effectuer un premier refroidissement du lait qui passe à travers ladite conduite de transport de lait (7).

4. Système (1) selon une ou plusieurs des revendications précédentes, **caractérisé en ce que** ladite cuve d'accumulation d'eau fraîche (13a) est reliée, au moyen d'un circuit de maintien (15), audit réservoir de stockage de lait à basse température (7b).

5. Système (1) selon une ou plusieurs des revendications précédentes, **caractérisé en ce que** ledit second réservoir d'accumulation d'eau chaude (6) est fonctionnellement relié à un dispositif (17) pour utiliser ladite eau chaude.

6. Système (1) selon une ou plusieurs des revendications précédentes, **caractérisé en ce que** ledit premier échangeur (9) est agencé en amont dudit second échangeur (12) le long de ladite conduite de transport de lait (7) .

7. Procédé pour traiter des produits zootechniques tels que du lait, avec un système (1) selon la revendication 1, qui comporte :
- une étape d'envoi d'eau à refroidir à une pompe à chaleur géothermique (2) à travers un premier circuit (4) d'eau à refroidir, qui est pourvu d'une conduite (4a) pour tirer de l'eau de puits à une première température et d'une conduite (4b) pour évacuer ladite eau de puits à une température qui est inférieure à ladite première température, et d'envoi d'eau à chauffer à travers un second circuit (5) d'eau à chauffer ;
- une étape de stockage de ladite eau chauffée dans au moins un premier réservoir d'accumulation d'eau chaude (3) ;
- une étape de stockage de ladite eau refroidie arrivant de ladite conduite d'évacuation dans une première cuve d'accumulation (8) ;
- une étape d'utilisation de ladite eau chauffée stockée dans ledit premier réservoir d'accumulation d'eau chaude (3) ;
- une étape d'utilisation de ladite eau refroidie stockée dans ladite première cuve d'accumulation (8).
